# EUROPEAN PATENT APPLICATION

(11) **EP 1 923 324 A1**
(43) Date of publication of application: **21.05.2008**
(21) Application number: 06768452.2
(22) Date of filing: 07.08.2006
(51) Int. Cl.: B65D 77/00, A47J 31/02, A47J 31/06

(54) **BAG FOR EXTRACTING BEVERAGE**

(30) Priority: 11.08.2005 JP 2005233386
(71) Applicant: YAMANAKA INDUSTRY CO., LTD., Kyoto-shi, Kyoto 616-8044 (JP); Suzuki, Motonobu, Kyoto-shi, Kyoto 6168045 (JP)
(72) Inventor: SUZUKI, Motonobu, Kyoto-shi, Kyoto 6168045 (JP)
(74) Representative: Müller-Boré & Partner Patentanwälte
(86) International application number: PCT/JP2006/315983
(87) International publication number: WO 2007/018302

(57) **Abstract**

In a system for placing an extraction bag on a drink preparation container when beverage is extracted, the extraction bag is held in a state of enhanced stability by a supporting sheet of paper stuck to the extraction bag and extractability is enhanced furthermore. When beverage is extracted while an extraction bag is placed on a drink preparation container, the bag can be held in more stable state by holding the side face of the cup widely in a stripe from by means of a joint provided between a supporting sheet of paper stuck to the extraction bag and its handle, and a pair of portions for coupling the handles with the lower end of the handles provided, respectively, on the front and rear of the extraction bag.

## Description

### Technical Field

The present invention relates to an extraction bag for coffee and teas such as black tea, Sencha green tea, oolong tea, and other health teas. In greater detail, this has a function that a joint and a pull are extended and retracted in a slightly bent shape with respect to a pull holding portion and the joint, respectively, by pulling and turning up a pull of the bag. Furthermore, the pulls provided two each on the front and rear of the extraction bag have a structure coupled by a coupling portion. Therefore, this is an extraction bag having a feature that fittability to a cup and extractability of coffee or the like are further enhanced in conjunction with an effect of fins provided in contact with cut parts of the pulls.

### Background Art

With the popularization of drinking coffee prepared by a drip method using a paper filter in recent years, a support for holding the filter on a cup in a stable manner at the time of extraction and enhancing extractability of coffee or the like has also come to be adopted. Several supports developed for this purpose have already been disclosed, however, there still exist many problems in stability at the time of extraction and handling such as seeping of fine grains and oil and fat, and many attempts have also been made in terms of bag shape and material in order to improve these problems.

For example, Japanese Published Unexamined Utility Model Application No. S55-123480 discloses a filter with pulls having a shape that allows hanging on the cup rim or the like, and in addition, Japanese Published Unexamined Patent Applications No. H03-210214 and H03-218711 and Japanese Published Unexamined Utility Model Application No. H07-223 disclose filters provided on their sides with pulls having been notched and allowing extraction while kept hanging on the cup rim for a long time. Furthermore, Japanese Published Unexamined Patent Application No. H06-315435 discloses a method for enhancing stability when hanging and holding a filter on the cup rim by providing notched pulls and small auxiliary pulls on the sides of the filter.

Furthermore, Japanese Published Unexamined Patent Application No. H10-85136 discloses a top-mount bag with a support for which, in the case of using a bag with a support composed of a bag for extracting beverage and a paper support for holding the bag on a cup, by providing punched sections at parts where, when opening the bag by increasing the interval between its front and rear sheets and placing the bag on a cup, the lower ends of four strips provided at the lower part of the support contact with a cup rim, fitting the cup rim with the punched sections, and fitting and fixing the cup rim into circular gaps provided at the ends of the punched sections, the bag can be held on the cup in a stable manner.

However, when these filters are used in a method of pouring hot water from the upper portion of the filters, there still have been problems in terms of making the thickness of a filtration layer for coffee grains and the like inside the filter uniform and securing sufficient stability. Moreover, recently, coffee bags being bags to which complicated bag retention mechanisms made of plastic or thick paper have been added, almost the whole part of which is placed on the rim of an upper portion of a cup when used, also being excellent in extractability, and have also been enhanced in stability have rapidly spread. However, these are complicated in structure and expensive, and as disposable articles for daily use, problems have also been pointed out from an environmental standpoint. Moreover, there is still room for improvement in various points when these are used for extracting teas such as black tea, Sencha green tea, oolong tea, and health teas, besides coffee.
(Patent Document 1) Japanese Published Unexamined Utility Model Application No. S55-123480
(Patent Document 2) Japanese Published Unexamined Patent Application No. H03-210214
(Patent Document 3) Japanese Published Unexamined Patent Application No. H03-218711
(Patent Document 4) Japanese Published Unexamined Utility Model Application No. H07-223
(Patent Document 5) Japanese Published Unexamined Patent Application No. H06-315435
(Patent Document 6) Japanese Published Unexamined Patent Application No. H10-85136

### Disclosure of the Invention

### (Problems to be Solved by the Invention)

The present invention aims to provide a bag for extracting beverage that, by improving, in a top-mount bag for extracting beverage, the structure of a support, can be held even on a cap having a wide range of diameters and can be sufficiently unfolded up to a bottom portion of the bag to enhance extractability and that, further by improving the structure of the part to hold the outer edge of a cup, can be held in a more stable manner during an extracting operation.

### (Means for Solving the Problems)

The inventors of the present invention have studied the material and structure of a support that allows, in the case of using a disposable-type extraction bag for coffee, tea, or the like by a drip method, sufficiently unfolding the opening of the bag even when the extraction bag is used for a cup having a wide range of diameters and further sufficiently unfolding the bag up to the bottom portion to enhance extractability. As a result, the inventors have developed an extraction bag structured such that part of a supporting sheet of paper for holding an extraction bag is punched, joints are provided via perforations; and further beyond these, pulls are provided. The degree of freedom is increased by interposing a freely extensible and retractable joint folded in a slightly bent shape midway between the supporting sheet of paper and the pull for holding a cup rim, so that when the extraction bag is mounted on a cup having a wide range of diameters, the extraction bag can be held in a sufficiently stable manner during extraction.

Furthermore, providing a portion that couples one and the other lower portions of the pulls provided two each on the front and rear of the bag has made it possible to hold a cap held in a further stable manner from the outside. Moreover, providing bendable fins via perforations at the edges of cut parts of the pulls for holding a cup rim has made it possible, even when the bag is used for a cup whose opening portion has a rim largely opened outward, to hold the cup rim in a sufficiently stable manner at the time of extraction. The inventors have arrived at the present invention based on these findings.

That is, the present invention provides a bag for extracting beverage. A bag for extracting beverage with a support (1) is formed of an extraction bag with a support including: an extraction bag (2) made of a sheet having filterability; and elastically hard supporting sheets of paper (3) and (3') for holding the extraction bag, stuck at symmetrical positions on the front and rear thereof.

The bag for extracting beverage with a support (1) is structured so that, in an upper portion of the supporting sheet of paper (3), (3'), cuts (4), (4') and (5), (5') and perforations (6), (6') and (7), (7') that are easily bendable are provided, respectively, in a longitudinal direction, and in a lower portion of the supporting sheet of paper (3), (3'), an inverted T-shaped bag holding piece (8), (8') is formed. In addition, via the perforations (6), (6') and (7), (7'), provided are joints (9), (9') and (10), (10') formed by punching part of the supporting sheet of paper, further beyond these via perforations (11), (11') and (12), (12'), provided are pulls (13), (13') and (14), (14') formed by punching part of the supporting sheet of paper.

Inside the pulls, provided are downward cuts (15), (15') and (16), (16'), and in contact with the cuts, provided are fins (19), (19') and (20), (20') via perforations or short cut lines (17), (17') and (18), (18'). Furthermore, formed on the front and rear of the bag are coupling portions (21) and (21') that connect lower portions of the pulls (13) and (13') and (14) and (14'), respectively.

When the bag for extracting beverage (1) is used, by pulling the pull coupling portions (21) and (21') on the front and rear of the bag in directions opposite to each other so as to expand the bag, the cuts (4), (4') and (5), (5') and perforations (6), (6') and (7), (7') provided in the upper portion of the supporting sheet of paper (3), (3') are easily bent, and the upper portion of the extraction bag (2) is opened. Furthermore, the pulls (13), (13') and (14), (14') are largely opened from side to side via the joints (9), (9') and (10), (10'). When a cup rim is inserted into the cuts (15), (15') and (16), (16'), the extraction bag is held by the fins (19), (19') and (20), (20') in a stable manner on the cup rim.

Here, the same reference numerals with and without a prime symbol such as "supporting sheets of paper (8) and (3')" denote identical structural parts located at symmetrical positions on the front and rear sides, respectively. In the following, the present invention will be described in detail.

The material of a bag for extracting beverage with a support of the present invention is not particularly limited as long as it is a sheet having filterability, and a wide range of materials can be used. Of these, a nonwoven fabric containing microfibers having a fineness of approximately 0.2 deniers or less is more preferable for its excellent filterability. This is excellent in, for example, removability of an extraction residue and oil and fat that are likely to cause excessively bitter coffee.

Although the shape of an extraction bag is not particularly limited, a shape gathered at the side face of a bag to increase the opening area is preferable, and furthermore, a lower portion of the bag preferably has a V-shaped cross section since it drains fluid satisfactorily. The bag of the present invention includes not only a bag in an opened state unfilled with contents that is used by appropriately filling contents such as coffee grains at the time of usage and pouring hot water but also a bag filled in advance with coffee grains or the like that is used by tearing along perforations or the like at the time of usage to open the bag and pouring hot water.

### (Effects of the Invention)

The bag for extracting beverage of the present invention is a disposable and drip-type extraction bag for coffee, tea, or the like mounted with a paper-made support. Due to an effect of the joints, which are provided by punching part of a supporting sheet of paper and have a folded shape, provided midway between the supporting sheet of paper and the pulls, there is an effect to sufficiently open the upper portion of the extraction bag. Furthermore, since the extraction bag is structured with a pair of coupling portions for coupling the pulls with the lower end of the pulls provided, respectively, on the front and rear of the extraction bag so as to widely hold the side face of a bag in a belt-like form, there is a function to allow holding the bag in a more stable manner at the time of extraction. The extraction bag of the present invention is characterized by its applicability to a cup having a wide range of shapes such as a demitasse, a glass, and a bell-shaped cup, besides a normal coffee cup or teacup.

### Brief Description of the Drawings

Fig. 1 shows a front view of a form of a bag for extracting beverage of the present invention, in a folded state before use.

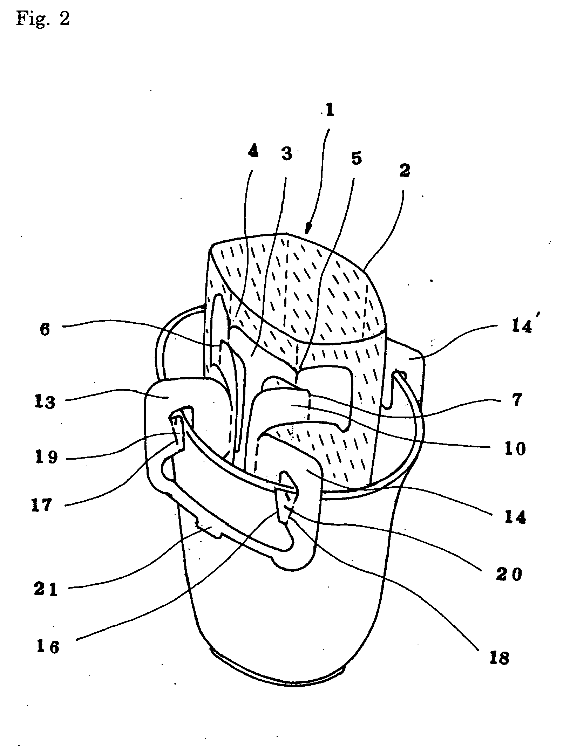

Fig. 2 shows a perspective view of the bag for extracting beverage of the present invention shown in Fig. 1 in a state mounted on a cup at the time of usage.

### Description of Symbols

(1) Bag for extracting beverage
(2) Extraction bag
(3), (3') Supporting sheet of paper
(4), (4'), (5), (5') Cut in supporting sheet of paper (3), (3')
(6), (6'), (7), (7') Perforations
(8), (8') Inverted T-shaped bag holding piece
(9), (9'), (10), (10') Joint
(11), (11'), (12), (12') Perforations
(13), (13'), (14), (14') Pull
(15), (15'), (16), (16') Internal downward cut in pull
(17), (17'), (18), (18') Perforations or short cut lines
(19), (19'), (20), (20') Fin in contact with internal cut in pull
(21), (21') Coupling portion at front end of adjacent pulls

### Best Modes for Carrying Out the Invention

The extraction bag of the present invention needs to be a bag made of a flexible sheet having filterability, the material thereof is not particularly limited, and woven fabric, knitting, nonwoven fabric, paper, or a composite material of these can be widely used. There is a subtle difference in filterability depending on the quality of the material and constitution of the bag, and this slightly influences the flavor of an obtained drink of preference. For example, the most important property required for a filter in order to brew coffee excellent in aroma and richness is to prevent fine coffee grains from seeping out in a coffee liquid. Furthermore, it is necessary to adsorb and remove oil and fat contained in the coffee liquid so that no oil film floats on the surface in a cup. These are both elements that seriously impair the taste of coffee and are not preferable since fine grains are rough and unpleasant on the tongue when being mixed therein and oil and fat glistens when it floats on the surface in a cup.

The material of an extraction bag for coffee and the like used in the present invention is not particularly limited, and a wide range of filter fabrics can be used as described above, while as a material to prevent finer grains from seeping and enhance adsorption of oil and fat, known is a nonwoven fabric containing microfibers having a fineness of approximately 0.2 deniers or less. Therefore, such a material is preferable for the bag of the present invention. The microfibers can be manufactured from a thermoplastic polymer by a melt-blowing method. The type of thermoplastic polymer includes polypropylene and polyethylene. Moreover, by using a composite nonwoven fabric of such a microfiber nonwoven fabric layer and a support layer made from normal-thickness fibers, filterability and mechanical properties of the filter fabric can further be improved.

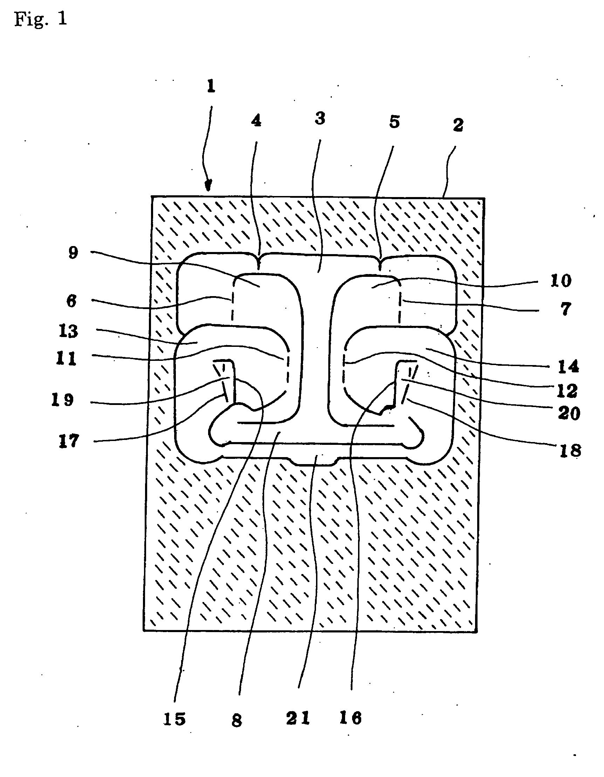

The shape of a bag body 1 is a rectangle as shown in Fig. 1, and the bag body can be used also by filling coffee grains, tea, or the like inside and immersing in hot water or pouring hot water as is conventionally generally used. However, it is not necessary to limit the shape to a rectangle, and as a matter of course, the bag body can be used even in a square shape. Recently, a method for which a complicated bag retention mechanism made of plastic or thick paper is added to a bag filled with coffee grains has also been used. The extraction bag is held on a cup during extraction and used in such a manner that a lower end of the bag never contacts with the liquid surface in the cup to collect an extracted and the extracted always drips from the lower end of the bag.

In addition, it is preferable that the pull holding portion and the pull are made of an elastically hard sheet. Being "elastically hard" is a sheet having rigidity and elasticity to some extent as well as plasticity to be held, when being deformed, in that shape such as, for example, Kent paper. This is, for example, slightly thick paper, a plastic sheet, or the like. In addition, since the pull holding portion is usually used in a state immersed in hot water, material having the quality of water resistance is preferable.

Although a supporting sheet of paper of a conventional extraction bag is composed of two parts of a pull and a pull holding portion serving as a base thereof, a joint connected via perforations is inserted between the pull holding portion and the pull in the present invention. Thus, formed between the pull holding portion and the pull via the joint are two structures extended and retracted in a "slightly bent" shape by pulling and turning up the pull. Therefore, whether the interval between the extraction bag and the cup rim portion is large or small, there is a feature that it becomes possible to attach the extraction bag without influence of deformation or the like on the bag.

The extraction bag of the present invention can be used by sealing an upper end thereof after filling contents therein and opening the upper end and pouring hot water from that part when being used, or can be used by appropriately placing contents such as coffee grains in the opened bag when being used and pouring hot water on top. Hereinafter, the present invention will be described more concretely while raising embodiments.

### (Embodiment 1)

Fig. 1 shows a front view of a form of a coffee or tea extraction bag of the present invention. The material of a bag (1) is a double layered laminated body of a nonwoven fabric having a weight of 10g/m² and a thickness of approximately 0.12mm made of 5µm -diameter meltblown polyethylene fibers excellent in filterability and a nonwoven fabric having a weight of 10g/m² and a thickness of approximately 0.08mm made of polyester fibers being short fibers having a fineness of 1.5 deniers (diameter of approximately 163µm) and a length of 50mm. Moreover, on the surface of the bag, a large number of fiber fusion areas are regularly arranged at predetermined intervals. The fiber fusion areas are effective also in improving strength and dimensional stability of the nonwoven fabrics. The ratio of the fiber fusion areas to the entire surface area is approximately 17%.

Fig. 1 shows a front view of a form of a bag for extracting beverage of the present invention. The extraction bag (1) is composed of a bag body (2) and a pull holding portion (3), (3'). The front shape of the extraction bag body (2) is a rectangle longer than wide, and the extraction bag body (2) is made of a double layered nonwoven fabric laminated body. In addition, a bag in a form provided on both sides thereof with gathers in order to increase the capacity of the bag can also be used. The pull holding portions (3) and (3') are attached to symmetrical positions on both front and rear surfaces of the bag.

In an upper portion of the supporting sheet of paper (3), (3'), cuts (4), (4') and (5), (5') and perforations (6), (6') and (7), (7') that are easily bendable are provided in a longitudinal direction, respectively. In a lower portion of the supporting sheet of paper (3), (3'), an inverted T-shaped bag holding piece (8), (8') is formed, and a horizontal part of the inverted T-shape at the bottom portion of the holding piece (8), (8') is stuck on the surface of the extraction bag (1) at a considerably deep position of the bag. There is therefore a function that, when the upper portion of the extraction bag is largely opened, the bag can be largely opened up to a deep part of the bag due to an effect of the inverted T-shaped bag holding pieces.

In addition, via the perforations (6), (6') and (7), (7') in the supporting sheet of paper, provided beyond these are joints (9), (9') and (10), (10') formed by punching part of the supporting sheet of paper. Further beyond these via perforations (11), (11') and (12), (12'), provided are pulls (13), (13') and (14), (14') formed by punching part of the supporting sheet of paper.

Here, in a central part up to the perforations (6), (6') and (7), (7') of the supporting sheet of paper (3), (3') and the part extended to the downside in an inverted T-shape are stuck on the surface of the extraction bag body (2), however, the parts of the joints (9), (9') and (10), (10') and the pulls (13), (13') and (14), (14') formed by punching part of the supporting sheet of paper (3), (3') are not stuck on the supporting sheet of paper (3), (3').

Therefore, when pull coupling portions (21) and (21') on the front and rear of the bag are pulled in directions opposite to each other so as to expand the bag, the bag is expanded. The cuts (4), (4') and (5), (5') and perforations (6), (6') and (7), (7') provided in the upper portion of the supporting sheet of paper (3), (3') are easily bent, and the upper portion of the extraction bag (2) is largely opened. At this time, the joints (9), (9') and (10), (10') are opened in a slightly bent shape with respect to the supporting sheet of paper (3), (3'), and furthermore, the pulls (13), (13') and (14), (14') are opened in a slightly bent shape with respect to the joints. Since, such a double slightly bent-shaped structural part that is extensible and retractable is formed between the sheet of paper and the pulls, the extraction bag (1) can be sufficiently fit in a cup having a broad range of diameters.

Furthermore, inside the pulls, a cup rim is inserted in downward cuts (15), (15') and (16), (16'), and at that time in contact with the cuts, provided are fins (19), (19') and (20), (20') via perforations or short cut lines (17), (17') and (18), (18'). Due to an effect of these fins having bendability, the extraction bag can be held in a more stable manner. Even when, for example, a cup whose opening portion has a rim largely opened outward is used, the extraction bag can be sufficiently fitted therein.

### Industrial Applicability

The bag for extracting beverage of the present invention is a disposable and drip-type extraction bag for coffee, tea, or the like mounted with a supporting sheet of paper. Due to an effect of the joints provided midway between the supporting sheet of paper and the pulls, not only can the upper portion of the extraction bag be sufficiently largely opened, but the extraction bag can also be widely fitted in a cup having a wide range of diameters. Furthermore, since the extraction bag is structured with a pair of coupling portions for coupling the pulls with the lower end of the pulls provided, respectively, on the front and rear of the extraction bag, the side face of a bag can be widely held in a belt-like form at the time of extraction, so that the bag can be held in a more stable manner when a beverage is extracted.

## Claims

1. A bag for extracting beverage,
a bag for extracting beverage with a support (1) being an extraction bag with a support comprising: an extraction bag (2) made of a sheet having filterability; and elastically hard supporting sheets of paper (3) and (3') for holding the extraction bag, stuck at symmetrical positions on the front and rear thereof, structured so that:
in an upper portion of the supporting sheet of paper (3), (3'), cuts (4), (4') and (5), (5') and perforations (6), (6') and (7), (7') that are easily bendable are provided, respectively, in a longitudinal direction; in a lower portion of the supporting sheet of paper (3), (3'), an inverted T-shaped bag holding piece (8), (8') is formed; in addition, via the perforations (6), (6') and (7), (7'), provided are joints (9), (9') and (10), (10') formed by punching part of the supporting *sheet of paper; further beyond these via perforations (11), (11') and (12), (12'), provided are pulls (13), (13') and (14), (14') formed by punching part of the supporting sheet of paper,
inside the pulls, provided are downward cuts (15), (15') and (16), (16'), and in contact with the cuts, provided are fins (19), (19') and (20), (20') via perforations or short cut lines (17), (17') and (18), (18'); and coupling portions (21) and (21') for lower portions of the pulls (13) and (13') and (14) and (14') are formed, respectively, on the front and rear of the bag, wherein
when the bag for extracting beverage (1) is used, by pulling the pull coupling portions (21) and (21') on the front and rear of the bag in directions opposite to each other so as to expand the bag, the cuts (4), (4') and (5), (5') and perforations (6), (6') and (7), (7') provided in the upper portion of the supporting sheet of paper (3), (3') are easily bent, and the upper portion of the extraction bag (2) is opened, and furthermore, the pulls (13), (13') and (14), (14') are largely opened via the joints (9), (9') and (10), (10'), and when a cup rim is inserted into the cuts (15), (15') and (16), (16'), the extraction bag is held by the fins (19), (19') and (20), (20') in a stable manner on a cup.
